# EUROPÄISCHE PATENTSCHRIFT

(11) **EP 0 833 758 B1**
(45) Veröffentlichungstag und Bekanntmachung des Hinweises auf die Patenterteilung: **29.09.2004**
(21) Anmeldenummer: 97904973.1
(22) Anmeldetag: 10.03.1997
(51) Int. Cl.: B60L 9/30

(54) **VERFAHREN UND SCHALTUNG ZUR UMFORMUNG ELEKTRISCHER ENERGIE**
PROCESS AND CIRCUIT FOR CONVERSION OF ELECTRICAL ENERGY
PROCEDE ET CIRCUIT POUR CONVERSION D'ENERGIE ELECTRIQUE

(30) Priorität: 12.03.1996 DE 19609550
(43) Veröffentlichungstag der Anmeldung: 08.04.1998
(73) Patentinhaber: DaimlerChrysler Rail Systems GmbH, 13627 Berlin (DE)
(72) Erfinder: KETTELER, Karl-Hermann, CH-5314 Kleindöttingen (CH)
(74) Vertreter: Thielmann, Andreas
(86) Internationale Anmeldenummer: PCT/CH1997/000093
(87) Internationale Veröffentlichungsnummer: WO 1997/033766

(56) Entgegenhaltungen:
- EP-A- 0 370 207
- ZEITSCHRIFT FUR EISENBAHNWESEN UND VERKEHRSTECHNIK. DIE EISENBAHN TECHNIK + GLASERS ANNALEN, Bd. 119, Nr. 9/10, 1.September 1995, Seiten 396, 398-407, XP000542110 KETTELER K -H: "WEITERENTWICKLUNG DER MAHRSYSTEMLOKOMOTIVEN AM BEISPIEL DER BAUREIHE E 412 DER ITALIENISCHEN STAATSBAHNEN"

## Beschreibung

### TECHNISCHES GEBIET

Bei der Erfindung wird ausgegangen von einem Verfahren und einer Schaltung zur Umformung elektrischer Energie nach dem Oberbegriff der Patentansprüche 1 und 3.

### STAND DER TECHNIK

Mit dem Oberbegriff der Patentansprüche 1 und 3 nimmt die Erfindung auf einen Stand der Technik Bezug, wie er aus der DE 41 38 256 bekannt ist. Dort wird ein Zweisystemkonzept für Bahnantriebe angegeben, das für eine NetzWechselspannung von 15 kV, 16 2/3 Hz, und eine Netz-Gleichspannung von 3 kV ausgelegt ist. Die Antriebsmaschinen werden über einen oder zwei Wechselrichter aus einem Gleichspannungszwischenkreis gespeist. Im Falle des Wechselstromnetzes wird der Gleichspannungszwischenkreis über zwei parallelgeschaltete Vierquadrantensteller gespeist, im Falle des Gleichspannungsnetzes über zwei in Reihe geschaltete Gleichspannungssteller.

### DARSTELLUNG DER ERFINDUNG

Die Erfindung, wie sie in den Patentansprüchen 1 und 3 definiert ist, löst die Aufgabe, ein Verfahren und eine Schaltung zur Umformung elektrischer Energie der eingangs genannten Art derart weiterzuentwickeln, sodass die Umformung mit einem geringeren technischen Aufwand möglich wird. Hierfür soll sowohl der Installationsaufbau der elektrischen Anlage verringert werden als auch eine Reduktion der mitgeführten Massen, insbesondere in einem Drehgestell eines Bahnantriebs erfolgen.

Der Kern der Erfindung besteht also darin, dass bei Betrieb an einer ersten Energiequelle mit einer Gleichspannung eine erste Teilwicklung eines Motors mit einem zweiten Stromrichter verbunden ist, während eine zweite Teilwicklung des Motors mit einem ersten Stromrichter verbunden wird, und dass bei Betrieb an einer zweiten Energiequelle mit einer Wechselspannung beide Teilwicklungen, also die erste und die zweite Teilwicklung, parallel an dem zweiten Stromrichter angeschlossen sind.

Eine bevorzugte Ausführungsform ist darin zu sehen, dass bei einer Energiespeisung aus einer Gleichspannungsquelle eine Verringerung von Netzstromoberschwingungen durch Phasenverschiebung der Ausgangsspannung der beiden Stromrichter erzielt wird, und infolgedessen eine Reduzierung von Motorzusatzverlusten sowie von Motorpendelmomenten zu verzeichnen ist.

Ein wesentlicher Vorteil der Erfindung besteht darin, dass somit die Anzahl verwendeter Motorkabel und die Anzahl verwendeter Drehstromschalter verringert wird. Der Schaltungsaufwand bei Umschaltungen zwischen Energiequellen mit verschiedener Spannung wird reduziert, sowie die installierte Kabelmasse in einem Drehgestell.
Es sind nur wenige kritische Umschalthandlungen erforderlich. Kritische Umschalthandlungen sind in diesem Zusammenhang Schalthandlungen innerhalb des Gleichspannungszwischenkreises des Umrichters, da die Schalter dort sehr niederinduktiv montiert sein müssen.
Die Erfindung stützt sich auf Zweipunkt-Schaltungstechnik und benötigt keine Hochsetz- oder Tiefsetzsteller mit den dazugehörigen Stellerdrosseln.
Bei der Umformung elektrischer Energie aus Gleichspannungsquellen ist nur eine einmalige Energieumwandlung erforderlich.

### KURZE BESCHREIBUNG DER ZEICHNUNGEN

Die Erfindung wird nachstehend anhand eines Ausführungsbeispiels erläutert. Es zeigen:
- Fig. 1: eine Mehrsystem-Antriebsschaltung mit einem Umrichter und zwei Maschinen mit zwei Teilwicklungen je Wechselstromphase in Sternschaltung bei Betrieb an einem Gleichspannungsnetz;
- Fig. 2: die Mehrsystem-Antriebsschaltung bei Betrieb an einem Wechselspannungsnetz.

In den Figuren sind die jeweils gleichen Teile mit denselben Bezugszeichen versehen, und es sind nur die für das Verständnis der Erfindung wesentlichen Elemente gezeigt.

### WEGE ZUR AUSFÜHRUNG DER ERFINDUNG

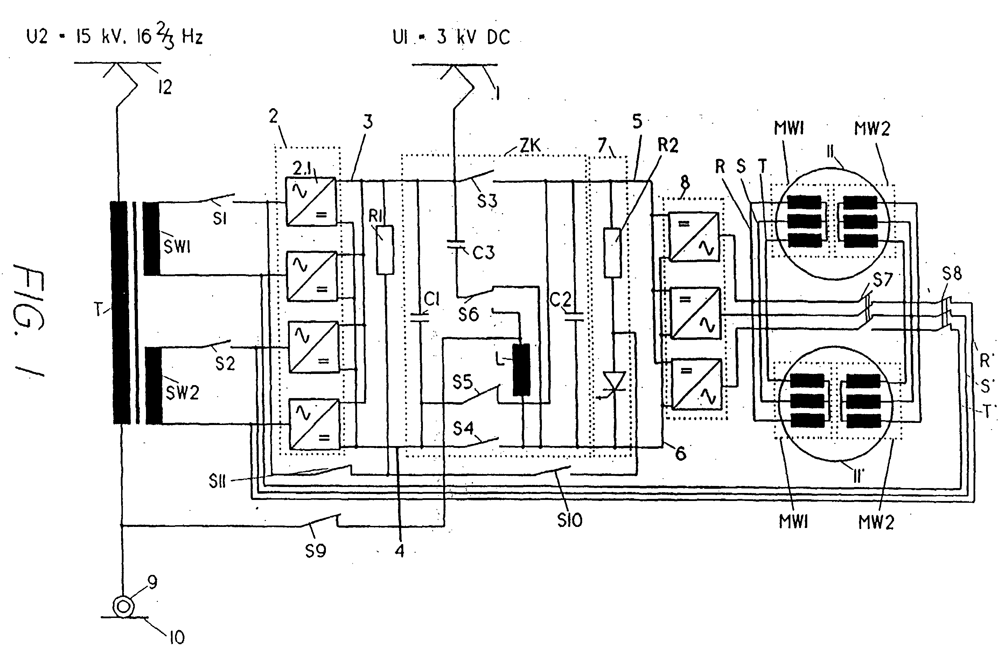

In Fig. 1 ist mit 1 eine Energiequelle bzw. ein Gleichspannungsnetz mit einer Gleichspannung U1 von 3 kV bezeichnet, das über einen Stromabnehmer einen Gleichspannungszwischenkreis ZK eines Umrichters 2, ZK, 8 speist.

Der erste Stromrichter 2 besteht aus vier gleichstromseitig parallelgeschalteten Teilstromrichtern. Die beiden oberen Teilstromrichter sind über einen ersten Schalter S1 mit einer ersten Sekundärwicklung SW1 eines Netztransformators T verbindbar, der primärseitig an ein Wechselspannungsnetz 12 mit einer 15 kV, 16 2/3 Hz Wechselspannung U2 angeschlossen ist. Die beiden unteren Teilstromrichter des ersten Stromrichters 2 sind über einen zweiten Schalter S2 mit einer zweiten Sekundärwicklung SW2 des Netztransformators T verbindbar. Der mit 2.1 bezeichnete obere Teilstromrichter des ersten Stromrichters 2 wird beim Bremsbetrieb eines Wechselstromverbrauchers bzw. Motors bzw. einer elektrischen Maschine 11, 11' in Verbindung mit einem Schalter S11 und einem Bremswiderstand R1 als Bremsenergiesteller bzw. als Momentanspannungsbegrenzer verwendet, um etwaige unerwünschte Überspannungen zu vermeiden. Parallel zu dem ersten Stromrichter 2 ist im Gleichspannungszwischenkreis ZK ein erster Zwischenkreiskondensator C1 geschaltet.

Der erste Stromrichter 2 ist über den Gleichspannungszwischenkreis ZK mit einem Wechselrichter bzw. zweiten Stromrichter 8 in Reihe geschaltet, wobei ein Pluspol 3 des ersten Stromrichters 2 an das Gleichspannungsnetz U1 angeschlossen ist, ein Minuspol 4 des ersten Stromrichters 2 über einen fünften Schalter S5 mit einem Pluspol 5 des zweiten Stromrichters 8 verbunden ist, und ein Minuspol 6 des zweiten Stromrichters 8 über eine Filterdrossel L, einen neunten Schalter S9 und mindestens einer Fahrzeugachse 9 mit der Schiene 10 verbunden und geerdet ist. Parallel zum zweiten Stromrichter 8 ist im Gleichspannungszwischenkreis ZK ein zweiter Zwischenkreiskondensator C2 und ein Bremssteller mit einem Bremswiderstand R2 bzw. ein Momentanspannungsbegrenzer 7 geschaltet, um etwaige unerwünschte Überspannungen zu vermeiden und über den Bremswiderstand R2 abzubauen.

Die elektrischen Maschinen 11, 11' weisen je eine dreisträngige Motor- bzw. Statorwicklung auf, die in zwei symmetrische, dreisträngige Wicklungssysteme bzw. in erste und zweite Teilwicklungen MW1, MW2 mit jeweils gleicher Windungszahl aufgeteilt ist. Die beiden Teilwicklungen MW1, MW2 sind in einer Sternschaltung installiert, und durch einen siebten Schalter S7 voneinander getrennt. Die mit dem siebten Schalter S7 verbundenen Enden der zweiten Teilwicklungen MW2 sind über einen achten Schalter S8 und Drehstromleitungen R', S', T' mit den Wechselstromausgängen der drei unteren Teilstromrichter des ersten Stromrichters 2 verbunden. Die mit dem 7. Schalter S7 verbundenen Enden der ersten Teilwicklungen MW1 sind über Drehstromleitungen R, S, T an die Wechselstromausgänge des zweiten Stromrichters 8 angeschlossen.

Die dargestellten Schaltpositionen mit gleichspannungsseitig in Reihe geschaltetem ersten Stromrichter 2 und zweiten Stromrichter 8 entsprechen einer Speisung der in Stern geschalteten elektrischen Maschinen 11, 11' aus dem 3-kV-Gleichspannungsnetz 1. Sofern das Gleichspannungsnetz 1 nicht in der Lage ist, zurückgespeiste Bremsenergie aufzunehmen, muss diese Energie in den Bremswiderständen R1, R2 in Wärme umgewandelt werden. In dieser Schaltung dienen die Zwischenkreiskondensatoren C1 und C2 in Parallelschaltung als Stützkondensatoren zur Glättung der Spannung im Gleichspannungszwischenkreis (ZK). Desweiteren dient ein Kondensator C3, der über einen Umschalter S6 ebenfalls parallel zu den Kondensatoren C1 und C2 angeschlossen ist dem gleichen Zweck der Spannungsglättung.

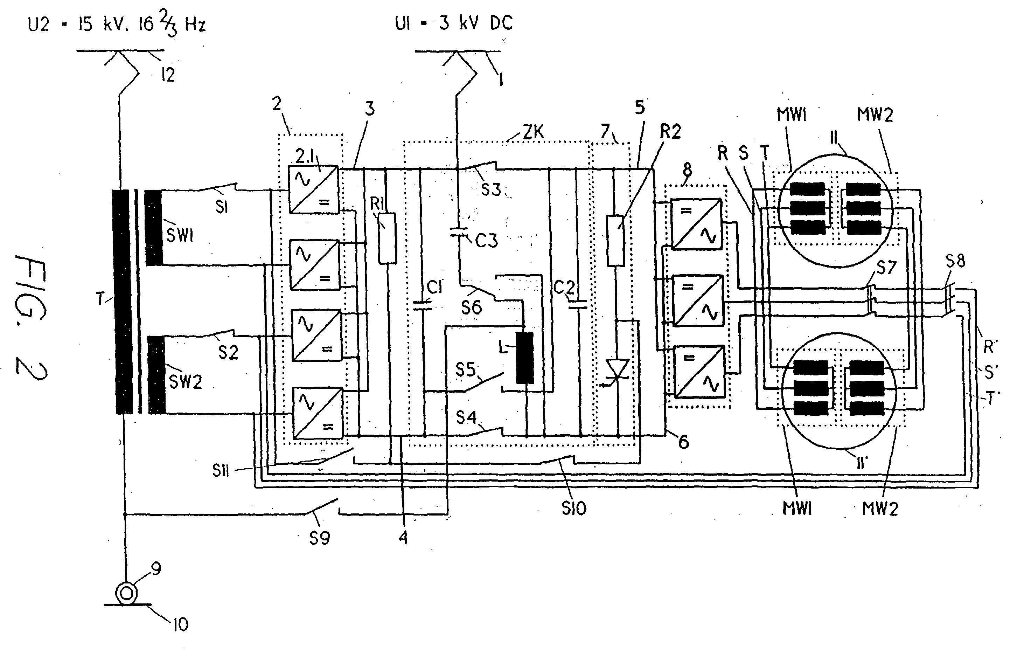

Fig. 2 zeigt das Schaltbild bei Betrieb an dem Wechselspannungsnetz 12. Die Umschaltung vom Gleichspannungsnetz 1 zum Wechselspannungsnetz 12 erfolgt in stromlosem Zustand, wobei die Schalter S1, S2, S3, S4, S7 und S10 geschlossen werden und die Schalter S5, S8, S9 und S11 geöffnet werden. Der Umschalter S6 ist derart umzuschalten, dass der Kondensator C3 und die Spule L in Reihe geschaltet werden. Der Stromabnehmer am Gleichspannungsnetz 1 ist dabei eingezogen. Die Teilwicklungen MW1, MW2 der elektrischen Maschinen 11, 11' sind parallelgeschaltet. Der bei Gleichspannungsbetrieb als Verbraucherstromrichter bzw. als Wechselrichter betriebene erste Stromrichter 2 wird nun als Netzstromrichter bzw. als Gleichrichter betrieben. Die Filterdrossel L wirkt jetzt zusammen mit dem in Reihe geschalteten Kondensator C3 als Saugkreis zum Kompensieren der pulsierenden Netzleistung. Der Saugkreis ist vorzugsweise auf die doppelte Netzfrequenz ausgelegt und nur bei einem einphasigen Wechselspannungsnetz erforderlich.
Bei einer Speisung der elektrischen Maschinen 11, 11' aus einem Wechselspannungsnetz kann im Regelfall Bremsenergie ins Wechselspannungsnetz zurückgespeist werden, wobei der zweite Stromrichter 8 als Gleichrichter und der erste Stromrichter 2 als Wechselrichter betrieben werden.

Alle installierten Schalter können manuell, motorisch, pneumatisch oder hydraulisch betrieben sein.
Als steuerbare Ventile in den Stromrichtern 2, 8 und 7 werden Halbleiterschalter eingesetzt. Entsprechend dem Stand der heutigen Technik können z. B. GTO-Thyristoren oder Transistoren eingesetzt werden.
Wesentlich ist, dass die Motorwicklungen MW1, MW2 sowohl bei Betrieb an einem Wechselspannungsnetz wie beim Betrieb an einem Gleichspannungsnetz in Parallelschaltung betrieben werden. Die Anzahl der Motorzuleitungen kann somit auf sechs beschränkt werden, das bedeutet, für jede Motorwicklung MW1, MW2 jeweils drei Motorleitungen für eine Drehstromspeisung. Ein Drehstromschalter und drei zusätzliche Motorleitungen für eine mögliche Reihenschaltung der Teilwicklungen MW1, MW2 sind einzusparen, da kein signifikante Spannungsdifferenz zwischen dem Betrieb an einem Gleichspannungsnetz und dem Betrieb an einem Wechselspannungsnetz für die Teilwicklungen MW1, MW2 zu verzeichnen sind.

Bei Wechselspannungsbetrieb beträgt die Zwischenkreisspannung 2 kV. Daraus ergibt sich eine bestimmte maximale Grundschwingungsklemmenspannung, für die ein Motor 11, 11' ausgelegt werden muss. Bei dieser stabilisierten Zwischenkreisspannung von 2 kV im Wechselspannungsbetrieb können vor allem durch Verwendung von Bauelementen dieser Spannungsklasse Einsparungen in Bezug auf Baugrösse, Gewicht und Kosten erzielt werden.

Bei Gleichspannungsbetrieb beträgt die Zwischenkreisspannung für die in Reihe geschalteten Stromrichter 2 und 8 jeweils etwa 1,5 kV bis maximal 2,1 kV. Somit ist für die Motorwicklungen gewährleistet, dass die Grundfeld-Luftspaltinduktion in einem Motor 11, 11' bei Gleich- und Wechselspannungsbetrieb in etwa gleich ist.

Die zwei Wicklungssysteme können im Motor 11, 11' um 30°/p versetzt werden sowie als 2p-polige Wicklungen ausgeführt werden, p = Polpaarzahl.
Durch die versetzte Anordnung von zwei dreisträngigen Wicklungen MW1, MW2 werden die Motorpendelmomente im Motor erheblich reduziert.

Jede Teilwicklung MW1, MW2 einer elektrischen Maschine 11, 11' kann selbstverständlich anstatt in Sternschaltung auch in Dreieckschaltung installiert und betrieben werden.

Durch eine versetzte Taktung der Wechselrichter wird bei Gleichspannungsbetrieb im Gleichspannungszwischenkreis ZK eine Reduktion der Netzrückwirkungen erreicht.
Die Motorwicklungen 11, 11' können natürlich auch in mehr als zwei Wicklungssysteme MW1, MW2 aufgeteilt werden. Dementsprechend müssten dann mehr als zwei Antriebsstromrichter eingesetzt werden. Dadurch lässt sich die Mehrsystemfähigkeit auf kleinere Netz-Gleichspannungen ausdehnen.

Soll sich die Mehrsystemfähigkeit auf weitere Netzwechselspannungen, z. B. 25 kV, erstrecken, so sind Netztransformatoren mit anderen Übesetzungsverhältnissen zu wählen. Der Einsatz an einem 1,5 kV Gleichspannungsnetz ist ebenfalls denkbar.
Anstelle einer elektrischen Maschine 11, 11' könnte auch ein nicht dargestellter Transformator vorgesehen sein, der z. B. an ein anderes Wechselstromnetz angeschlossen ist und als Wechselstromverbraucher der Energieübertragung dient.

### BEZEICHNUNGSLISTE

- 1: Gleichspannungsnetz, Energiequelle
- 2: 1. Stromrichter, Gleichrichter, Netzstromrichter
- 2.1: Bremssteller, Teilstromrichter von 2
- 3: Pluspol von 2
- 4: Minuspol von 2
- 5: Pluspol von 8
- 6: Minuspol von 8
- 7: Bremssteller bzw. Momentanspannungsbegrenzer
- 8: 2. Stromrichter bzw. Wechselrichter, Verbraucherstromrichter
- 9: Fahrzeugachse
- 10: Schiene
- 11, 11': elektrische Maschine, Motor, Wechselstromverbraucher
- 12: Wechselspannungsnetz, Energiequelle

- C1, C2: Zwischenkreiskondensatoren
- C3: Kondensator
- L: Filterdrossel, Saugkreisdrossel
- MW1: 1. Teilwicklungen von 11, 11'
- MW2: 2. Teilwicklungen von 11, 11'
- R1, R2: Bremswiderstände
- R, S, T; R', S', T': Drehstromleitungen, Wechselstromphasen
- S1 - S11: Schalter, Umschalter, Schalteinrichtungen
- SW1, SW2: Sekundärwicklungen von T
- T: Netztransformatoren
- U1: Gleichspannung
- U2: Wechselspannung
- ZK: Gleichspannungszwischenkreis
- °: Phasenwinkel, Phasenverschiebung

## Patentansprüche

1. Verfahren zur Umformung elektrischer Energie,
a) bei dem elektrische Energie aus mindestens einer ersten Energiequelle (1) mit einer vorgebbaren Gleichspannung (U1) und einer zweiten Energiequelle (12) mit einer vorgebbaren Wechselspannung (U2)
b) über mindestens einen Netzstromrichter bzw. ersten Stromrichter (2) und mindestens einen Verbraucherstromrichter bzw. zweiten Stromrichter (8)
c) in elektrische Energie für eine elektrische Anlage oder einen Wechselstromverbrauchers (11, 11') umgeformt wird, der je Wechselstromphase (R, S, T) mindestens eine erste Teilwicklung (MW1) und eine zweite Teilwicklung (MW2) aufweist, wobei diese Teilwicklungen (MW1, MW2) voneinander getrennte, stromführende Wicklungen darstellen,
**dadurch gekennzeichnet**,
d) dass vor einem Umschalten von der zweiten Energiequelle (12) mit einer vorgebbaren Wechselspannung (U2) auf eine erste Energiequelle (1) mit einer vorgebbaren Gleichspannung (U1), die parallel an dem zweiten Stromrichter (8) betriebenen Teilwicklungen (MW1, MW2) voneinander getrennt werden, wobei die zweite Teifwicklung (MW2) mit dem ersten Stromrichter (2) verbunden wird und die erste Teilwicklung mit dem zweiten Stromricher (8) verbunden bleibt, sodass die unterschiedlichen Teilwicklungen (MW1, MW2) von unterschiedlichen Stromrichtern (2, 8) gespeist werden,
e) dass vor einem Umschalten von der ersten Energiequelle (1) mit einer vorgebbaren Gleichspannung (U1) auf die zweite Energiequelle (12) mit einer vorgebbaren Wechselspannung (U2) die getrennten Teilwicklungen (MW1, MW2) des Wechselstromverbrauchers (11, 11') je Wechselstromphase (R, S, T) elektrisch parallel an den zweiten Stromrichter (8) angeschaltet werden, wobei die zweite Teilwicklung (MW2) von dem ersten Stromrichter (2) getrennt wird, und dass der erste Stromrichter (2) von einem Betrieb als Verbraucherstromrichter auf einen Betrieb als Netzstromrichter umgeschaltet wird.

2. Verfahren nach Anspruch 1,
**dadurch gekennzeichnet,**
**dass** bei einer Energiespeisung aus einer Gleichspannungsquelle (1) unterschiedliche Teilwicklungen (MW1, MW2) zur Reduzierung von Netzrückwirkungen mit einer gegenseitigen Phasenverschiebung der Ausgangsspannung der unterschiedlichen Stromrichter (2, 8) betrieben werden.

3. Schaltung zur Umformung elektrischer Energie
a) wobei ein erster Stromrichter (2) und ein zweiter Stromrichter (8) mit einer ersten Energiequelle (1) mit einer Gleichspannung (U1) oder einer zweiten Energiequelle (12) mit einer Wechselspannung (U2) verbunden sind,
b) wobei der zweite Stromrichter (8) wechselstromseitig mit einer elektrischen Anlage oder mindestes einem Wechselstromverbraucher (11, 11') in Verbindung steht,
c) und der Wechselstromverbraucher (11, 11') je Wechelstromphase (R, S, T) mindestens eine erste Teilwicklung (MW1) und eine zweite Teilwicklung (MW2) aufweist,
**dadurch gekennzeichnet**,
d) dass bei einer Speisung des ersten Stromrichters (2) und des zweiten Stromrichters (8) aus der ersten Energiequelle (1) mit einer Gleichspannung (U1) die erste Teilwicklung (MW1) mit dem zweiten Stromrichter (8) verbunden ist und die zweite Teilwicklung (MW2) mit dem ersten Stromrichter (2), wobei die Stromricher (2, 8) als Wechselrichter betrieben werden,
e) dass die Teilwicklungen (MW1, MW2) bei einer Speisung des ersten Stromrichters (2) aus der zweiten Energiequelle (12) mit einer Wechselspannung (U2) parallel an dem zweiten Stromrichter (8) angeschlossen sind, wobei der erste Stromrichter (2) als Gleichrichter betrieben wird und der zweite Stromrichter (8) als Wechselstromrichter.

## Claims

1. Method for converting electrical energy,
a) in which electrical energy from at least a first energy source (1)providing a selectable DC voltage (U1) and a second energy source (12) providing a selectable AC voltage (U2) is converted
b) via at least one line power converter or first power converter (2), respectively, and at least one load power converter or second power converter (8), respectively,
c) into electrical energy for an electrical installation or an AC load (11, 11') which has per AC phase (R, S, T) at least one first partial winding (MW1) and a second partial winding (MW2), these partial windings (MW1, MW2) representing mutually separated, current-carrying windings,
characterized
d) in that, before switching over from the second energy source (12) having a selectable AC voltage (U2) to a first energy source (1) having a selectable DC voltage (U1), the partial windings (MW1, MW2), operated in parallel at the second converter (8), are mutually separated, wherein the second partial winding (MW2) is connected to the first power converter (2) and the first partial winding remains connected to the second power converter (8), such that the different partial windings (MW1, MW2) are fed from different power converters (2, 8),
e) in that, before switching over from the first energy source (1) having a selectable DC voltage (U1) to the second energy source (12) having a selectable AC voltage (U2), the separated partial windings (MW1, MW2) of the AC load (11, 11') are connected electrically in parallel per AC phase (R, S, T) to the second power converter (8), wherein the second partial winding (MW2) is separated from the first power converter (2), and in that the first power converter(2) is switched over from operation as a load power converter to operation as a line power converter.

2. Method according to Claim 1,
**characterized in**
**that** in the case of energy being fed from a DC voltage source (1), in order to reduce line feedback effects, different partial windings (MW1, MW2) are operated with a mutual phase shift of the output voltage of the different power converters (2, 8).

3. Circuit for converting electrical energy,
a) wherein a first power converter (2) and a second power converter (8) are connected to a first energy source (1) providing a DC voltage (U1) or a second energy source (12) providing an AC voltage (U2),
b) wherein the second power converter (8) is connected on the AC side to an electrical installation or at least one AC load (11, 11'),
c) and wherein the AC load (11, 11') has at least one partial winding (MW1) and a second partial winding (MW2) per AC phase (R, S, T),
characterized
d) in that, in the case of feeding the first power converter (2) and the second power converter (8) from the first energy source (1) providing a DC voltage (U1), the first partial winding (MW1) is connected to the second power converter (8) and the second partial winding (MW2) is connected to the first power converter (2), the power converters (2, 8) being operated as inverters,
e) and in that, in the case of feeding the first power converter (2) from the second energy source (12) providing an AC voltage (U2), the partial windings (MW1, MW2) are connected in parallel to the second power converter (8), the first power (2) converter being operated as a rectifier and the second power converter (8) being operated as an AC inverter.

## Revendications

1. Procédé de conversion électrique,
a) dans lequel de l'énergie électrique d'au moins une première source d'énergie (1) délivrant une tension continue (U1) sélectionnable et d'une deuxième source d'énergie (12) délivrant une tension alternative (U2) sélectionnable,
b) par l'entremise d'au moins un convertisseur de puissance de réseau ou un premier convertisseur (2), respectivement, et d'au moins un convertisseur de puissance de consommateur ou un deuxième convertisseur (8), respectivement,
c) est convertie en énergie électrique pour une installation électrique ou un consommateur de courant alternatif (11, 11'), lequel présente à chaque phase de courant alternatif (R, S, T) au moins une première partie d'enroulement (MW1) et une deuxième partie d'enroulement (MW2), ces parties d'enroulement (MW1, MW2) constituant des enroulements conducteurs de courant et séparés les uns des autres,
caractérisé
d) en ce que, avant une commutation de la deuxième source d'énergie (12) délivrant une tension alternative (U2) sélectionnable à une première source d'énergie (1) délivrant une tension continue (U1) sélectionnable, les parties d'enroulement (MW1, MW2) mises en fonction de manière parallèle au deuxième convertisseur de puissance (8) sont séparées l'une de l'autre, moyennant quoi la deuxième partie d'enroulement (MW2) est reliée au premier convertisseur de puissance (2) et la première partie d'enroulement (MW1) reste reliée au deuxième convertisseur de puissance (8), de telle sorte que les différentes parties d'enroulement (MW1, MW2) sont alimentées par des convertisseurs de puissance différents (2, 8),
e) en ce que, avant une commutation de la première source d'énergie (1) délivrant une tension continue (U1) sélectionnable à la deuxième source d'énergie (12) délivrant une tension alternative (U2) sélectionnable, les parties d'enroulement séparées (MW1, MW2) du consommateur de courant alternatif (11, 11') sont commutées à chaque phase de courant alternatif (R, S, T) électriquement parallèle au deuxième convertisseur de puissance (8), moyennant quoi la deuxième partie d'enroulement (MW2) est séparée du premier convertisseur de puissance (2), et en ce que le premier convertisseur de puissance (2) est commuté d'un fonctionnement comme convertisseur de puissance de consommateur à un fonctionnement comme convertisseur de puissance de réseau.

2. Procédé selon la revendication 1, **caractérisé en ce que**, lors d'une alimentation en énergie par une source de tension continue (1), des parties d'enroulement (MW1,MW2) différentes, pour réduire les effets rétroactifs de réseau, sont mises en fonction avec un décalage de phase mutuelle de la tension de sortie des différents commutateurs de puissance (2, 8).

3. Circuit pour convertir une énergie électrique
a) dans laquelle un premier convertisseur de puissance (2) et un deuxième convertisseur de puissance (8) sont reliés à une première source d'énergie (1) délivrant une tension continue (U1) ou une deuxième source d'énergie (12) délivrant une tension alternative (U2),
b) dans laquelle le deuxième convertisseur de puissance (8) est relié du côté courant alternatif à une installation électrique ou à au moins un consommateur de courant alternatif (11, 11'),
c) et le consommateur de courant alternatif (11, 11') présente à chaque phase de courant alternatif (R,S,T) au moins une première partie d'enroulement (MW1) et une deuxième partie d'enroulement (MW2),
caractérisé
d) en ce que, lors d'une alimentation en tension continue (U1) du premier convertisseur de puissance (2) et du deuxième convertisseur de puissance (8) par la première source d'énergie (1), la première partie d'enroulement (MW1) est reliée au deuxième convertisseur de puissance (8) et la deuxième partie d'enroulement (MW2) est reliée au premier convertisseur de puissance (2), les convertisseurs de puissance (2, 8) étant mises en fonction comme onduleurs,
e) et en ce que, lors d'une alimentation en tension alternative (U2) du premier convertisseur de puissance (2) par la deuxième source d'énergie (12), les parties d'enroulement (MW1, MW2) sont connectées de manière parallèle au deuxième convertisseur de puissance (8), le premier convertisseur de puissance (2) étant mis en fonction comme redresseur et le deuxième convertisseur de puissance (8) étant mis en fonction comme onduleur.
